# EUROPEAN PATENT APPLICATION

(11) **EP 0 711 088 A2**
(43) Date of publication of application: **08.05.1996**
(21) Application number: 95850184.3
(22) Date of filing: 24.10.1995
(51) Int. Cl.: H04Q 7/22, H04B 7/26, H04Q 7/24, H04Q 7/30

(54) **Device for increasing the communication speed in a digital mobile telephone system**

(30) Priority: 07.11.1994 SE 19940003839
(71) Applicant: TELIA AB, S-123 86 Farsta (SE)
(72) Inventor: Eriksson, Göran, SE-137 56 Västerhaninge (SE)
(74) Representative: Karlsson, Berne

(57) **Abstract**

Device at a digital mobile telephone system, for instance GSM-system, to increase the speed of the communication between users, which GSM-system comprises capacity consuming functions with respect to transmission speed, for instance an inefficient use of time in the channels, handover functions etc. The mentioned completing functions are arranged momentarily disconnectable and during the disconnection the mentioned increase of speed is arranged to be made.

## Description

### TECHNICAL FIELD

Device at digital mobile telephone system such as, for instance, a GSM-system for increasing the speed at communication between users, which GSM-system comprises capacity consuming functions with regard to transmission speed, for instance inefficient use of time in the channels, handover function etc.

### PRIOR ART

It has previously been suggested different ways and devices to allocate a transmission different transmission capacity, for instance by varying the numbers or length of the time slots.

By the American patent document US, A 4 763 322 is described a digital, cellular radio system which uses TDM. The document describes how the division into time slots is made with regard to the need for the different stations. This implies that a user can be allotted a time slot of different length, depending on the need of bandwidth.

Further is shown in the American patent document US, A 4675863 a system for wireless transmission of TDM-traffic. The quality of the transmitted information is decided by the number of "time division circuits".

The American patent document US, A 4891805 describes a time multiplexing system where the number of time slots per channel can be allotted, depending on the width of the channel.

None of the above mentioned documents describes any type of system that is applicable on GSM, or anticipates the following idea.

### DESCRIPTION OF THE INVENTION

### TECHNICAL PROBLEM

The aim with the invention is to achieve, in relation to the prior art, an improved system for increasing the data speed for mobile telephone systems of the type GSM.

The conditions in a radio system differ in many respects from those prevalent in a network with physically fixed connections, above all with regard to available band width in the radio spectra. Whereas one in the fixed network in principle can get just any bandwidth if one is ready to pay for it, the radio spectra is a restricted natural resource. One cannot therefore base a radio system on the in the wire network standardized bit rate 64 kbit/s. This would create quite absurd demands for frequency assignments.

The frequency band which GSM is allotted is 25 MHz in the 890-915 MHz band, with belonging duplex band in 935-960 MHz. The duplex distance is consequently 45 MHz. With 200 kHz bandwidth on each carrier, this gives about 124 frequency channels, FDMA, where each frequency channel in its turn is time divided into 8 channels, TDMA. This gives in total about 1000 duplex channels. The maximum data speed is restricted to 9,6 kbit/s, which in comparison with the fixed network is experienced as low, and the aim with the invention is to increase this speed.

### THE SOLUTION

The above aims are achieved by the invention showing the characteristics in the enclosed patent claims. The preferred embodiment is among other things characterized in that one, in order to increase the transmission speed at transmission of digital information between users in a cellular mobile radio system, such as for instance GSM where each TDMA-frame consists of 8 channels, makes certain completing functions momentarily disconnectable. The GSM-system contains channels for different system functions, as for instance handover, setup and traffic channels etc. These completing functions need not always be accessible. That implies that several functions can be momentarily disconnected, which implies that further capacity can be made use of by supplying further channels. By time multiplexing being effectuated, the speed is considerably increased. This is made possible by time multiplexing of the number of channels which during the operation mode of the system are possible to use for the multiplexing. This is consequently depending on how many channels that can be spared at a certain traffic state. Maximally 8 channels can participate in the multiplexing, which gives a maximum speed of about 80 kbit/s. It is, however, possible to multiplex a lower number of channels. The disconnection of normal GSM-channels is made possible because it is performed during a short time interval, for instance 2 s, which implies that large amounts of information are transmitted in the system, without the other functions of GSM-system noticeably disappearing, or for the user are experienced as not accessible.

### ADVANTAGES

The transmission time existing in the GSM-system consists of a connection time and data transmission time, and this time can be reduced.

The speed for the transmission of data and information can be made at speeds from 9,6 kbit/s up to 8 times 9,6 kbit/s. Accordingly the maximum data speed becomes about 80 kbit/s. Especially advantageous is the possibility to transmit big amounts of data during a short period of time. As examples can be mentioned texts, routing information from special traffic supervision systems etc.

### DESCRIPTION OF FIGURES

The invention shall now be described by means of not restricted examples of embodiments and with reference to enclosed, schematically performed drawings. In the drawing shows:
- Figure 1: a network structure for GPRS which is a system for packet radio in GSM.
- Figure 2: TDM-frame in GSM.
- Figure 3: TDM-frame when 1 channel is used as GPRS-channel.
- Figure 4: TDM-frame when 3 channels are used as GPRS-channels.

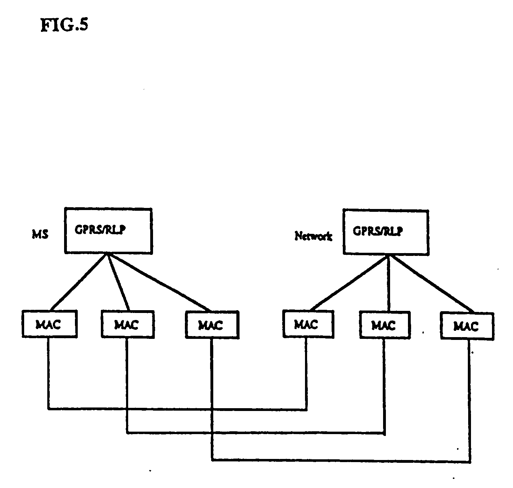

- Figure 5: shows how GPRS/RLP interacts with a number of MAC-connections.

### PREFERRED EMBODIMENT

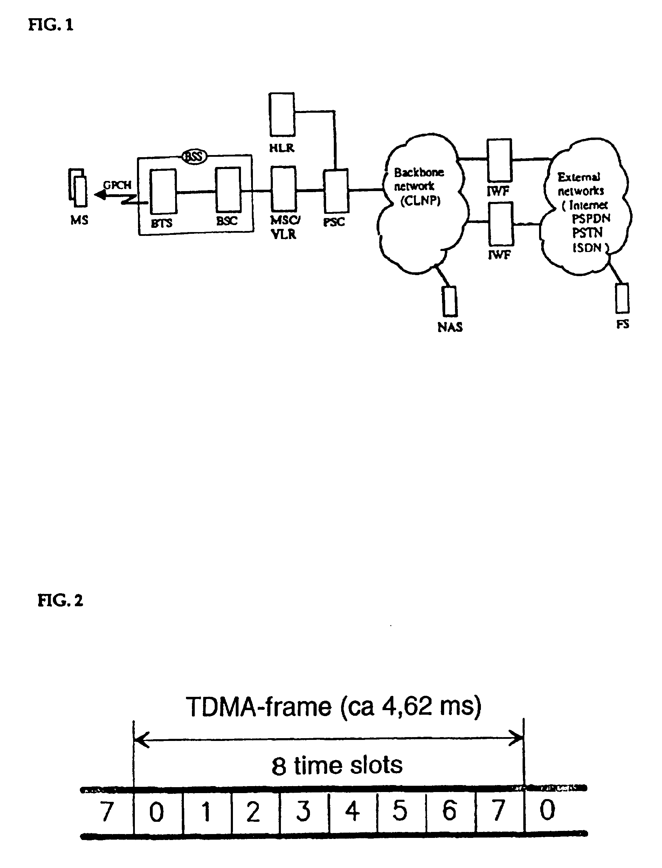

In Figure 1 is shown a network structure for GPRS which is a system for packet radio in GSM. MS in the Figure constitutes a complete mobile station consisting of the mobile station unit and a small unit called SIM, which is a physical unit in the form of an IC-card.

The European GSM-system is built up from a number of different GSM-networks managed by operators in different countries. All operators in a country has its own mobile telephone network, a "Public Land Mobile Network" (PLMN).

The whole covering area of the mobile telephone network is divided into a number of switching areas, MSC-areas, which in their turn can consist of one or more traffic areas, "Location Areas". What characterizes a location area is that a mobile can move within the area without need to update a traffic area register, "location register". Within each traffic area are a number of base stations connected, covering local areas called cells.

The traffic areas consist of a number of "Base station systems", (BSS). A base station system covers a base station area, consisting of one or more cells. The base station system consists of Base Station Controller (BSC), and a number of stations containing both transmitters and receivers, so called Base Transceiver Stations (BTS).

BSC is a network component controlling one ore more BTS at which the main tasks are managing of traffic channels by channel allocation, control and disconnection of link, and efficiency control, as well as managing of measurements and handover.

A BTS is a network component which serves a cell. BTS contains one or more combined transmitters/receivers, Tranceivers (TRX).

A PLMN is consequently divided into one or more mobile telephone switches depending on the size of the system (capacity and covering area) which the operator supplies in his system.

The mobile telephone swith is called "Mobile Service Switching Center" (MSC). The MSC functions as an interface between the fixed telephone network and the mobile telephone network (Gateway MSC), and between a number of MSC which serve different geographical parts of the network.

The mobile station is the subscribers's equipment which can be mounted in a car or carried by hand. In GSM there is a definite difference between the physical apparatus and the subscription. All information which is related to the subscriber is stored in a "smart card" which can be used in just any mobile station.

The "Visited Location Register" (VLR) contains subscriber information to those who are whithin the traffic areas belonging to this VLR. When subscriber "mobile" is searched, "roaming number" is fetched by HRL which has a reference to current VLR. In this way the network can rapidly and efficently find the mobile at calls from the telecommunications network. Each mobile belongs to a "Home Location Register" (HLR). This register contains all necessary subscriber and mobile information, among other things information about in which VLR and traffic area the mobile is.

HLR is the register which gateway MSC or a telephone station (in the fixed network) asks about to get "roaming number" to wanted mobile. If a mobile moves in a traffic area into another, all relevant register parameters on the mobile are transmitted from HRL to the VLR of the new traffic area. In HRL a reference is attached to the new VLR.

Each carrier gives in the previously mentioned frequency range about 124 frequency channels, FDMA (procedure which allows common utilization of a link with frequence multiplexing technology).

These channels are normally utilized at conventional use in GSM. Considering a TDMA-frame according to Figure 2, which is a normal frame in the GSM-system, there are 8 physical channels which we label 0-7. Each channel can transmit information with a speed of 9,6 kbit/s. Channel no 0 is the broadcast BCCH-channel and is used for transmitting continuous system- and base parameters from base to mobile. The channel with no 1 is for short messages and connection to the system, and is labelled SDCCH. The other channels 2-7 are traffic channels and are used for speech, circuit switched data or fax, and other system information and are called TCH-channels.

If for instance channel 4 is used for transmission of speech in the GSM-system, this channel is locked during the whole time the connection is established. At normal calls it is usually so that the one who transmits information talks during about 40% of the time, and the reciever is also talking during the same length of time. This implies that there is a certain time interval in the call when those who are talking with each other do not transmit speech. This results in capacity being lost.

By using the GPRS packet radio system in GSM, one lets in principle one of the TCH-channels be special for the GPRS-system and labels it the GPCH-channel, se Figure 2 and the line-marked channel no 7. This channel listens to the system all the time when the system is operating and is available to transmit information directly when needed, at which the transmission is performed during a short period of time, for instance one or a few seconds.

MS will at the use of packet radio for GSM establish connection with GPRS-service via the GSM PRMA-channel (GPCH). GPCH is a new channel for GPRS and is a logical channel with connection to many MS. When an MS uses GPRS and connection to MS occurs, a virtual connection identifier (VCI) consisting of a 16 bits data file is allocated to identify the receiver of the signal packet. Each VCI is unique in the local area (LA).

BBS directs mobile emanating packets towards PSC and mobile finishing packets to different MS.

MSC/VRL initiates at request from PSC contact with one or more GPCH on each BTS. The contact is permanent or variable depending on the traffic which is needed for normal GSM-service.

MSC/VLR initiates depending on the operator's policy and on inquiry from PSC the establishment of one or more GPCH in BTS.

The establishment can be permanent or depending on the traffic that is needed for "normal" GSM-service.

PCS arranges VCI to register MS. Further, PCS exercises control, supervision and contains a parameter storing function related to the MS which uses GPRS and directs, by a backbone network, packets to and from PSC. The backbone network is also used for directing packets in and between different PLMN. The standard which is used for this network is connectionless network protocol (CLNP).

IWF is responsible for necessary functionality to apply the system at fixed data network such as Internet, PSPDN and ISDN. Further shall be noted that there may be more than one IWF having the task to cooperate with different networks.

Network application servers (NAS) are used to support specific GPRS-service and applications such as transmission and multicast.

Grouping of logically coordinated functions on a certain level in a communications system is called layer. The principle is that the functional and logical interfaces of the layer towards over- and underlaying layers can be standardized.

The layer medium access control (MAC) shall supply GPRS/RLP with a transmission mechanism in the air interface.

The MAC-layer transmits a 240 bit slot containing GPRS/RLP-information. Further the MAC-level uses 3 indicators for controlling the access for the GPRS-mobiles in each cell that uses GPRS. To indicate whether the channel is free or not, BSS uses a free/occupied indicator.

The MAC-layer is also responsible for solving problems with access showers which collides, and managing of situations with undecodable slots. The mechanism used for this is the free/occupied indicator. If two MS transmits access showers which collides, the BSS does not change the status on the free/occupied indicator. Therefore the colliding MS informs that BSS has not been able to interpret the transmitted access shower, and therefore MS shall repeat the transmission of the access shower after a randomly chosen time.

MS stops the transmission immediately when it cannot code the received slots, and MAC informs that it is not accessible. MS uses a more indicator (MI) to inform BSS whether it has more slots to transmit.

The maximum time a MS has possibility to transmit is restricted to 2 s. After that MS stops the transmission and goes back to its starting point, or if needed is a new MAC-connection established by transmitting random access showers. This procedure removes the need for the signalling channel which usually is parallell with the traffic/speech channel, and is called SACCH. This is possible because the propagation time delay is comparatively stable at normal speeds, and because measurement reporting is not needed for handover functions.

By using many MAC-connections the GPRS-system can accordingly be extended. Further the total data speed can vary depending on that the time slots are accessible at each contact with MAC. The general packet radio service/radio link protocol (GPRS/RLP) assorts the received MAC-slots because one cannot be sure that they are arriving in correct sequence.

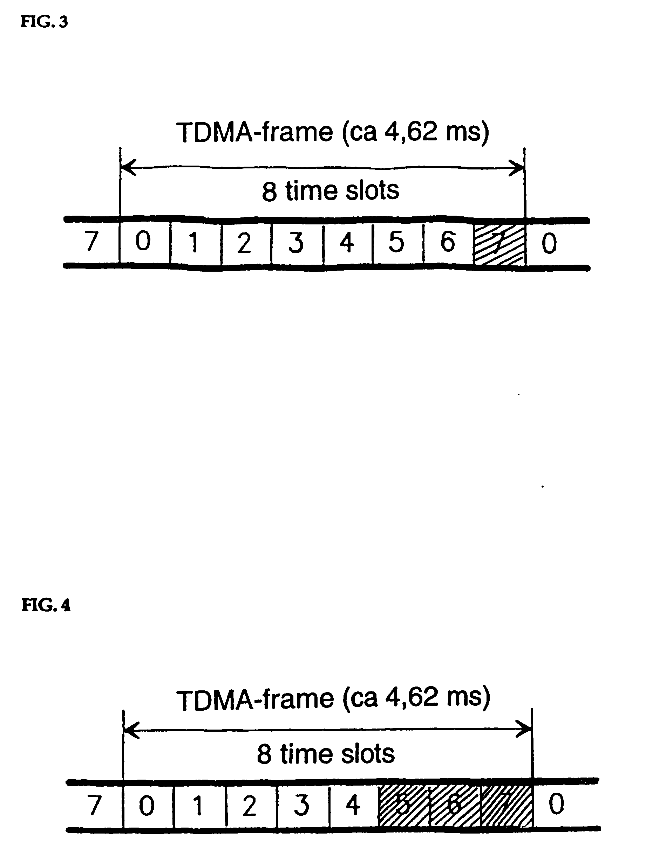

Figure no 4 shows how GPRS/RLP cooperates with a number of MAC-connections. When GPRS/RLP uses a number of MAC-connections it is only one GPRS/RLP-connection, and it is that GPRS/RLP-connection which exercises the control by using the number of intended slot.

The invention is not restricted to the showed examples of embodiment but can be varied in a random way within the frame of the invention idea, as it is defined in the following patent claims.

## Claims

1. Device at a digital mobile telephone system, for instance GSM-system to increase the speed of the communication between users, which GSM-system comprises capacity consuming functions with regard to transmission speed, for instance an inefficient use of time in the channels, handover function etc, **characterized in that** the mentioned completing functions are arranged momentarily disconnectable and that, during the disconnection, the mentioned increase of speed is intended to be made.

2. Device according to patent claim 1, **characterized in that** one channel is disconnected from the GSM-system making it possible to be used as a channel for packet radio in GSM.

3. Device according to any of the previous patent claims, **characterized in that** several channels are disconnected depending on the user situation and the load on the network.

4. Device according to any of the previous patent claims, **characterized in that** time multiplexing is effectuated in the used channels when more than one channel is disconnected.

5. Device according to any of the previous patent claims, **characterized in that** the momentary disconnection is performed during a short time interval.

6. Device according to any of the previous patent claims, **characterized in that** the maximum speed in the system is 8 times 9,6 kbit/s.
